# EUROPEAN PATENT APPLICATION

(11) **EP 4 667 548 A1**
(43) Date of publication of application: **24.12.2025**
(21) Application number: 25183273.9
(22) Date of filing: 17.06.2025
(51) Int. Cl.: C09J 7/35

(54) **ADHEREND WITH ADHESIVE LAYER, ROLL-SHAPED ADHEREND WITH ADHESIVE LAYER, AND STRUCTURE**

(30) Priority: 21.06.2024 JP 2024100266; 26.09.2024 JP 2024167759
(71) Applicant: DENSO CORPORATION, Kariya-city, Aichi-pref., 448-8661 (JP)
(72) Inventor: OKUHIRA, Hiroyuki, Kariya-city, Aichi-pref., 448-8661 (JP); IKEDA, Tatsuya, Tokyo, 103-0011 (JP); RACHI, Rioko, Tokyo, 103-0011 (JP)
(74) Representative: Kuhnen & Wacker Patent- und Rechtsanwaltsbüro PartG mbB

(57) **Abstract**

An adherend with an adhesive layer includes an adherend that is composed of a metal material or a resin material, and an adhesive layer that is laminated on a surface of the adherend and formed from an uncured curable resin composition that is in a solid state at room temperature. The curable resin composition includes (A) an epoxy resin having a melting point of 90°C or higher, and (B) a curing agent that is a solid at 25°C.

## Description

### BACKGROUND

### [Technical Field]

The present disclosure relates to an adherend with an adhesive layer, a roll-shaped adherend with an adhesive layer, and a structure.

### [Related Art]

Conventionally, adherends with adhesive layers in which a surface of an adherend composed of various metal materials or resin materials is precoated with an adhesive layer composed of an adhesive resin composition have been known.

For example, JP 2006-104300 A describes an adherend with an adhesive layer in which one surface of an aluminum-based material that is the adherend is coated with a liquid epoxy-based adhesive resin composition, a curing reaction is promoted by performing a drying process at 150°C, and the adhesive layer is semi-cured and made tack-free.

In addition, JP 2016-113483 A describes a sheet-shaped resin composition that, while not an adherend with an adhesive layer, contains a crystalline bisphenol F-type epoxy resin having a melting point of 70°C or higher and 90°C or lower, a solid polyfunctional epoxy resin having a softening point of 75°C or lower, and the like, and is used to bond adherends by being inserted in a gap therebetween.

During production of the above-described adherends with adhesive layers, the resin composition may be stored for a long period of time until the adhesive layer is formed. If viscosity of the resin composition that is in a liquid state increases after storage of the resin composition compared to an initial preparation of the resin composition, issues occur in the production of the adherend with an adhesive layer. Therefore, the resin composition is required to have favorable storage stability.

In addition, if a surface of the adhesive layer is sticky, workability during handling of the adherend with an adhesive layer becomes poor. Therefore, a release film is commonly provided on the surface of the adhesive layer to prevent the sticky adhesive layer from bonding to other surfaces. Even if stickiness of the surface of the adhesive layer is suppressed at room temperature, the surface often becomes sticky when exposed to a high temperature of about 80°C.

When the adherend with an adhesive layer in JP 2006-104300 A is heated to about 80° C, the adhesive layer softens and bonding occurs between the adherends with adhesive layers. Furthermore, in the adherend with an adhesive layer in JP 2006-104300 A, the adhesive layer is required to be semi-cured before being bonded to a counterpart adherend to make the adhesive layer tack-free. Therefore, the curing reaction during bonding is reduced by this amount, and adhesiveness also decreases.

The sheet-shaped resin composition in JP 2016-113483 A uses the crystalline bisphenol F-type epoxy resin having a melting point of 70°C or higher and 90°C or lower, but also uses the solid polyfunctional epoxy resin having a softening point of 75°C or lower in combination. Therefore, an overall melting point decreases. Consequently, when the sheet-shaped resin composition in JP 2016-113483 A is exposed to a high temperature of about 80°C, the surface of the adhesive layer becomes sticky and bonding occurs between the adherends with adhesive layers.

### SUMMARY

It is thus desired to provide an adherend with an adhesive layer in which an uncured curable resin composition has favorable storage stability and stickiness of the adhesive layer can be suppressed, a roll-shaped adherend with an adhesive layer using the adherend with an adhesive layer, and a structure using the adherend with an adhesive layer.

An aspect of the present disclosure provides an adherend with an adhesive layer that includes an adherend that includes a metal material or a resin material, and an adhesive layer that is laminated on a surface of the adherend and formed from an uncured curable resin composition that is in a solid state at room temperature. The curable resin composition includes (A) an epoxy resin having a melting point of 90°C or higher and (B) a curing agent that is a solid at 25°C.

Another aspect of the present disclosure provides a roll-shaped adherend with an adhesive layer that is formed into a roll shape by the adherend with an adhesive layer being wound in a longitudinal direction.

Still another aspect of the present disclosure provides a structure that is using the adherend with an adhesive layer.

The above-described adherend with an adhesive layer has the above-described configuration. Therefore, in the adherend with an adhesive layer, the uncured curable resin composition has favorable storage stability and stickiness of the adhesive layer can be suppressed.

The above-described roll-shaped adherend with an adhesive layer has the above-described configuration. Therefore, the roll-shaped adherend with an adhesive layer according to the present embodiment can be supplied to a highly productive roll-to-roll line, enabling structures to be manufactured at low cost. **In** addition, the roll-shaped adherend with an adhesive layer according to the present embodiment can be formed into adherends with adhesive layers of various dimensions by a cutting position in the longitudinal direction being selected as appropriate. As a result, the adherends with adhesive layers can be applied to structures of various dimensions, and a degree of freedom in production is high.

The above-described structure is configured using the adherend with an adhesive layer in which stickiness of the adhesive layer can be suppressed. Therefore, the structure according to the present embodiment has excellent workability during handling of the adherend with an adhesive layer during production. In addition, during production of the structure according to the present embodiment, the adherend with an adhesive layer can be bonded to the counterpart adherend by heating. Therefore, a step of applying a separate adhesive when bonding the adherends can be omitted. Consequently, the structure according to the present embodiment is excellent in terms of productivity.

### BRIEF DESCRIPTION OF THE DRAWINGS

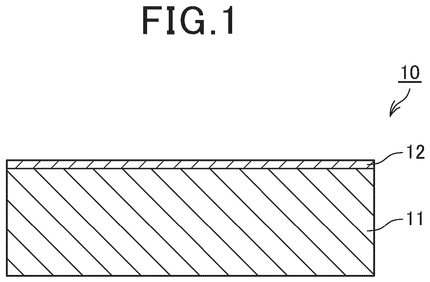

Fig. 1 is a cross-sectional view of an adherend with an adhesive layer according to a first embodiment of the present disclosure.

### DESCRIPTION OF THE EMBODIMENTS

An adherend with an adhesive layer, a roll-shaped adherend with an adhesive layer, and a structure according to each embodiment of the present disclosure will hereinafter be described in detail with reference to the drawings. Here, the adherend with an adhesive layer, the roll-shaped adherend with an adhesive layer, and the structure according to each embodiment of the present disclosure are not limited to the examples below. In addition, lower limit values and upper limit values of numerical ranges given below can be arbitrarily combined (omitted hereafter).

### (First embodiment)

An adherend with an adhesive layer according to a first embodiment of the present disclosure will be described with reference to Fig. 1. As shown in Fig. 1, an adherend with an adhesive layer 10 according to the present embodiment has an adherend 11 and an adhesive layer 12 formed from an uncured curable resin composition.

The adherend 11 includes a metal material or a resin material. Examples of the metal material composing the adherend 11 include aluminum, aluminum alloys, copper, copper alloys, iron, iron alloys, nickel, nickel alloys, magnesium, magnesium alloys, titanium, and titanium alloys. The metal material can be selectively used depending on application, purpose, and the like, taking into consideration lightness of weight, thermal conductivity, strength, and the like.

For example, heat exchangers such as automobile radiators are mainly manufactured by subjecting aluminum and aluminum alloys to non-corrosive flux brazing (hereinafter, referred to as NB brazing). From the perspective of circular economy and the like, manufacturing using recycled aluminum is a future consideration. However, recycled aluminum often contains magnesium as an impurity. An issue arises in that NB brazing of aluminum and aluminum alloys containing magnesium is difficult. Therefore, when bonding such adherends 11, a bonding technique to replace brazing is required. As a bonding technique to replace brazing, there is a technique in which a thermoplastic resin is applied to a surface of the adherend 11 and solidified to form the adhesive layer 12 on the adherend 11 in advance. However, as the temperature of the adhesive layer 12 rises, the adhesive layer 12 becomes stickier and bonding occurs more easily. In addition, because the adhesive layer 12 is merely thermoplastic resin that has been melted and solidified, and no curing by crosslinking has occurred, the adhesive layer 12 easily peels off at, for example, about 150°C. In contrast, in the adherend with an adhesive layer 10 according to the present embodiment, the adhesive layer 12 is formed from an uncured curable resin composition. Therefore, the cured adhesive layer 12 does not melt and peel off at about 150°C. Consequently, in the adherend with an adhesive layer 10 according to the present embodiment, even in cases in which the adherend 11 includes aluminum or an aluminum alloy containing magnesium, stickiness of the surface of the adhesive layer 12 at high temperatures is minimal and adhesive strength can be ensured.

Examples of the resin material composing the adherend 11 include polyesters such as polybutylene terephthalate (PBT), polyphenylene sulfide (PPS), as well as polyamide (PA), polycarbonate (PC), polyacetal (POM), and polyether ether ketone (PEEK). As the resin material composing the adherend 11, engineering plastics such as polybutylene terephthalate and polyphenylene sulfide, and the like, can be selected from the perspective of ease of moldability and excellent structural strength when used in a structure. Here, as long as at least a portion of the adherend 11 in which the adhesive layer 12 is formed (a portion in contact with the adhesive layer 12) includes the above-mentioned materials, portions other than the portion in which the adhesive layer 12 is formed may include the same material as the portion in which the adhesive layer 12 is formed or a different material. In addition, a shape of the adherend 11 can be selected as appropriate depending on the application of the adherend with an adhesive layer 10 and the like. The shape of the adherend 11 can be, for example, a plate-like shape or a predetermined shape imparted from a plate-like state.

The adhesive layer 12 is formed from an uncured curable resin composition. Therefore, the adherend with an adhesive layer 10 can be bonded to a counterpart adherend 11 through the adhesive layer 12 by curing the curable resin composition. The adhesive layer 12 is laminated on the surface of the adherend 11. The adhesive layer 12 may be formed on the overall surface of the adherend 11 or only a portion of the surface of the adherend 11.

For example, in cases in which the adherend 11 is plate-shaped or the like, the adhesive layer 12 can be formed on at least one surface of the plate-shaped adherend 11, and may be formed on one or both surfaces of the plate-shaped adherend 11.

The uncured curable resin composition is in a solid state at room temperature. That is, the uncured curable resin composition is a solid at room temperature. In the adherend with an adhesive layer 10 according to the present embodiment, "uncured" includes not only a completely uncured state, but also a semi-cured state such as a B-stage state. The curable resin composition forming the adhesive layer 12 in the adherend with an adhesive layer 10 according to the present embodiment may, of course, be in a semi-cured state. However, there is little need for semi-curing because the curable resin composition is in a solid state at room temperature and has almost no tackiness (adhesiveness) or stickiness. Rather, the curable resin composition is preferably in a state in which the curing reaction has not progressed, that is, a curing reaction rate is 0%, from the perspective of advantageousness in improving adhesive strength by using the entirety of the curable resin composition in the curing reaction, and the like. Here, the curing reaction rate can be determined by differential scanning calorimetry (DSC).

A thickness of the adhesive layer 12 is not particularly limited but can be, for example, 10 µm or greater and 5 mm or less from the perspective of wettability and spreadability over an uneven surface of the adherend 11, prevention of contamination of surroundings by excess adhesive, and the like.

Here, the above-described curable resin composition includes (A) a crystalline epoxy resin and (B) a curing agent as essential components.

The crystalline epoxy resin that is component (A) has a melting point of 90°C or higher. If the melting point is lower than 90°C, the surface of the adhesive layer 12 becomes sticky when exposed to a high temperature environment of 80°C (such as during transportation by truck or storage in summer). The adhesive layer 12 becomes more likely to bond with the counterpart adherend 11 and the like.

The melting point of the crystalline epoxy resin can be preferably 93°C or higher, more preferably 95°C or higher, and even more preferably 100°C or higher. Here, the melting point of the crystalline epoxy resin can be, for example, 200°C or lower from the perspective of suppressing a curing temperature.

Examples of the crystalline epoxy resin include biphenyl-type epoxy resin, dioxane-type epoxy resin, and anthracene-type epoxy resin. A representative biphenyl-type epoxy resin is YX4000 manufactured by Mitsubishi Chemical Corporation. A representative dioxane-type epoxy resin is YDC1312 manufactured by Nippon Steel Chemical & Material Co., Ltd. A representative anthracene-type epoxy resin is YX8800 manufactured by Mitsubishi Chemical Corporation. These crystalline epoxy resins can be used alone or in combination of two types or more.

The crystalline epoxy resin may or may not contain an epoxy resin having a biphenyl skeleton with a substituent group. In addition, the crystalline epoxy resin may or may not contain an epoxy resin having a biphenyl skeleton without a substituent group. Preferably, the crystalline epoxy resin is such that a mass ratio of the epoxy resin having a biphenyl skeleton without a substituent group in the crystalline epoxy resin is 2% or greater and 60% or less. Here, the "mass ratio of the epoxy resin having a biphenyl skeleton without a substituent group in the crystalline epoxy resin" may be simply shortened hereafter to an "unsubstituted biphenyl epoxy ratio".

When the unsubstituted biphenyl epoxy ratio is within the above-described range, the curable resin composition in a liquid state tends to more quickly become a solid film when returning to the curable resin composition in a solid state. Therefore, there is an advantage in that work efficiency regarding application of the curable resin composition to the adherend 11 is favorable. A reason for this is thought to be because interference due to substituents between adjacent epoxy resins is reduced. That is, it is thought that adjacent epoxy resin particles more easily aggregate and align with each other, thereby increasing a crystallization rate of the epoxy resin. It is also thought that cohesive strength between epoxy resins increases, which is advantageous in improving adhesive strength after curing.

The unsubstituted biphenyl epoxy ratio can be preferably 4% or greater, more preferably 6% or greater, even more preferably 8% or greater, and still more preferably 10% or greater. The unsubstituted biphenyl epoxy ratio can also be preferably 59% or less, more preferably 58% or less, and even more preferably 55% or less.

The curing agent that is component (B) is capable of reacting with the crystalline epoxy resin that is component (A). However, the curing agent that is component (B) is a solid at 25°C. If the curing agent is a liquid at 25°C, the storage stability of the uncured curable resin composition becomes poor, and the surface of the adhesive layer 12 becomes sticky when exposed to a high-temperature environment of 80°C.

An example of the curing agent is an amine-based curing agent. Specific examples of the curing agent include dicyandiamide (DICY) or a derivative thereof, diaminodiphenyl sulfone (DDS) or a derivative thereof, and aromatic diamines such as 4,4-diaminodiphenyl ether, 1,4-bis(4-aminophenoxy)benzene, 1,3-bis(4-aminophenoxy)benzene, 4-aminophenyl 4-aminobenzoate, 2,2-bis[4-(4-aminophenoxy)phenyl]propane, 4,4'-diaminobenzanilide, 4,4'-diamino-2,2'-bis(trifluoromethyl)biphenyl, 2,2'-bis(3-amino-4-hydrophenyl)propane, or derivatives thereof. A representative example of dicyandiamide or a derivative thereof is DICY7 manufactured by Mitsubishi Chemical Corporation. These curing agents can be used alone or in combination of two types or more.

As the curing agent, an amine-based curing agent having a melting point of 170°C or higher can be suitably used. The melting point of the curing agent is preferably 170°C or higher because the surface of the adhesive layer 12 is less likely to become sticky when exposed to a high-temperature environment of 80°C, and the curing reaction is less likely to progress when the curable resin composition is heated to about 130°C and liquefied during application. The melting point of the curing agent is preferably 180°C or higher, more preferably 190°C or higher, and even more preferably 200°C or higher. The melting point of the curing agent is preferably 300°C or lower, and more preferably 280°C or lower.

In addition, because the curing agent is an amine type, the curing agent is highly reactive to epoxy groups. Therefore, an amount of time required for adhesive strength to be developed through crosslinking becomes shorter, which is advantageous in terms of shortening production time

A mass ratio of the curing agent to the crystalline epoxy resin, in terms of an equivalent of active hydrogen to epoxy group, can be preferably 0.2 equivalents or greater and 2.0 equivalents or less, more preferably 0.3 equivalents or greater and 1.8 equivalents or less, and even more preferably 0.4 equivalents or greater and 1.5 equivalents or less. In this case, the uncured curable resin composition has excellent storage stability, and the adhesive layer after curing also has excellent strength.

In the adherend with an adhesive layer 10 according to the present embodiment, the curable resin composition can further contain (C) an amorphous thermoplastic resin. In this case, higher adhesive strength can be more easily ensured. In addition, flexibility of the adhesive layer 12 after curing increases, which is also advantageous in terms of improving toughness.

From the perspective of strength, toughness, and the like at high temperatures, the amorphous thermoplastic resin preferably has a glass transition temperature of 150°C or higher, more preferably 180°C or higher, and even more preferably 200°C or higher. In addition, the amorphous thermoplastic resin is preferably compatible with the crystalline epoxy resin before the crystalline epoxy resin is crosslinked.

Furthermore, the amorphous thermoplastic resin is preferably contained in the curable resin composition in the form of particles. Because the amorphous thermoplastic resin is a polymer, if the amorphous thermoplastic resin is present in a uniformly dissolved state in the uncured curable resin composition, viscosity of the curable resin composition increases and coating workability decreases when the uncured curable resin composition in a liquid state is applied to the adherend during production of the adherend with an adhesive layer 10. In contrast, when the amorphous thermoplastic resin is contained in the curable resin composition in the form of particles, the viscosity of the curable resin composition is less likely to increase, and coating workability is improved. In this case, all of the amorphous thermoplastic resin blended in the curable resin composition may be present as particles. Alternatively, a portion of the amorphous thermoplastic resin blended in the curable resin composition may be present as particles, with the remaining amorphous thermoplastic resin dissolved in the curable resin composition. Here, for the amorphous thermoplastic resin to be present as particles in the curable resin composition, for example, heating time when the crystalline epoxy resin and the amorphous thermoplastic resin are heated and stirred to achieve compatibilization, as described hereafter, may be set to be shorter than the heating time required for the amorphous thermoplastic resin to completely dissolve, and some of the amorphous thermoplastic resin may remain undissolved. Alternatively, the crystalline epoxy resin that has been heated and melted may simply be mixed with the amorphous thermoplastic resin that is in a particle state.

An average particle size of the amorphous thermoplastic resin particles in the curable resin composition can be preferably 0.1 µm or greater, more preferably 0.2 µm or greater, and even more preferably 0.5 µm or greater, from the perspective of improving the adhesive strength, improving the toughness of the adhesive layer 12 after curing, and the like. In addition, the average particle size of the amorphous thermoplastic resin particles can be preferably 200 µm or less, more preferably 150 µm or less, and even more preferably 100 µm or less, from the perspective of uniform dispersibility in the curable resin composition, the properties of the curable resin composition, suppression of unevenness in the surface of the adhesive layer 12, and the like. The above-described average particle size is a particle size (diameter) d50 at which a volume-based cumulative frequency distribution measured by a laser diffraction/scattering method indicates 50%.

Specific examples of the amorphous thermoplastic resin include polyvinyl chloride (PVC), polystyrene (PS), polymethyl methacrylate (PMMA), acrylonitrile butadiene styrene (ABS), polycarbonate (PC), modified polyphenylene ether (m-PPE), polyethersulfone (PES), polyetherimide (PEI), polyamideimide (PAI), and polyphenylene ether (PPE). These amorphous thermoplastic resins can be used alone or in combination of two types or more. Of these amorphous thermoplastic resins, polyethersulfone can be suitably used from the perspective of compatibility with the crystalline epoxy resin, high glass transition temperature, and the like.

When the curable resin composition includes the (C) amorphous thermoplastic resin, the mass ratio of the amorphous thermoplastic resin to the crystalline epoxy resin is preferably 5% or greater and 100% or less. In this case, the adhesive strength of the adhesive layer 12 after curing can be improved while the storage stability of the uncured curable resin composition is enhanced and stickiness of the adhesive layer 12 is suppressed. The mass ratio of the amorphous thermoplastic resin to the crystalline epoxy resin can be preferably 6% or greater and 80% or less, more preferably 7% or greater and 70% or less, and even more preferably 8% or greater and 60% or less, from the perspective of improving the toughness of the adhesive layer 12.

The above-described curable resin composition may contain a curing accelerator, for example, in addition to the above-described components. From the perspective of storage stability of the uncured curable resin composition and the like, the curing accelerator preferably has a melting point of 130°C or higher, more preferably 150°C or higher, and even more preferably 180°C or higher. From the perspective of preventing a reaction start temperature from becoming too high and the like, the curing accelerator preferably has a compatibilization temperature for compatibilization with the crystalline epoxy resin or the curing agent of 200°C or lower, more preferably 170°C or lower, and even more preferably 150°C or lower.

When the curable resin composition includes the curing accelerator, the mass ratio of the curing accelerator to the crystalline epoxy resin can be 0.01% or greater and 5% or less. In this case, curing time can be shortened and adhesive strength can be quickly developed while the storage stability of the uncured curable resin composition is enhanced and stickiness of the adhesive layer 12 is suppressed.

As a result of the adherend with an adhesive layer 10 according to the present embodiment, an adherend with an adhesive layer 10 can be obtained in which the uncured curable resin composition has favorable storage stability, and stickiness of the adhesive layer 12 can be suppressed.

In addition, in the adherend with an adhesive layer 10 according to the present embodiment, the adhesive layer 12 before curing is in a solid state at room temperature (25°C), and the surface of the adhesive layer 12 has little stickiness. Therefore, workability during handling is excellent. Furthermore, when a plurality of adherends with adhesive layers 10 are stacked and transported or stored without release films therebetween, the surfaces of the adhesive layers 12 can remain non-sticky even when heated to about 80°C. Therefore, mutual bonding of adherends with adhesive layers 10 can be suppressed. Moreover, at a temperature at which at least the crystalline epoxy resin that is component (A) is liquefied (a temperature at least equal to or higher than the melting point of the crystalline epoxy resin that is component (A)), such as about 120°C to 130°C, the adhesive layer 12 is melted, crosslinked, and cured. Adhesive strength between the adhesive layer 12 and the counterpart adherend 11 can be ensured. The adherend with an adhesive layer 10 according to the present embodiment is in a solid state at room temperature and has reduced tackiness even if the curing reaction rate of the adhesive layer 12 is 0%. Therefore, the adherend with an adhesive layer 10 according to the present embodiment is advantageous in that the curing reaction contributing to bonding increases and adhesiveness is improved, compared to techniques that aim to reduce tackiness by placing the adhesive layer 12 in a B-stage state, that is, by slightly progressing the curing reaction of the adhesive layer 12.

In addition, because the adherend with an adhesive layer 10 according to the present embodiment is in a state in which the surface of the adherend 11 is precoated with the adhesive layer 12, the adherend with an adhesive layer 10 can be bonded to the counterpart adherend 11 by heating the adherend with an adhesive layer 10. Therefore, in the adherend with an adhesive layer 10 according to the present embodiment, a step of separately applying an adhesive when bonding the adherends 11 during production of a structure can be omitted. The adherend with an adhesive layer 10 according to the present embodiment can improve productivity in the production of structures.

For example, the adherend with an adhesive layer 10 according to the present embodiment can be manufactured in a following manner, but is not limited thereto.

The uncured curable resin composition that is in a solid state at room temperature is prepared. For example, the curable resin composition can be prepared by the components being kneaded at once at a temperature ranging from 80°C to 100°C, and then returned to a temperature at which the kneaded components become solid, such as room temperature. In addition, for example, in cases in which the amorphous thermoplastic resin that is component (C) is used, the curable resin composition can be prepared in a following manner. That is, the crystalline epoxy resin that is component (A) and the amorphous thermoplastic resin that is component (C) are compatibilized by heating and stirring at a temperature at which at least the crystalline epoxy resin that is component (A) is liquefied (a temperature at least equal to or higher than the melting point of the crystalline epoxy resin that is component (A)), or dispersed, and subsequently returned to a temperature below the above-described melting point, such as room temperature. A compatibilized body or a dispersion in a solid state is formed. Next, this solid-state compatibilized body or dispersion is pulverized into a pulverized material. Then, this pulverized material, the curing agent that is component (B), a curing accelerator if necessary, and the like are kneaded at a temperature ranging from about 80°C to 100°C, and subsequently returned to a temperature at which the material becomes solid, such as room temperature. The curable resin composition can thereby be prepared.

Next, the uncured curable resin composition that is in a solid state at room temperature is liquified by heating to a temperature at which the curable resin composition liquefies. The liquified curable resin composition is then applied to the surface of the adherend 11 and returned to a temperature at which the curable resin composition becomes solid. Alternatively, the uncured curable resin composition in a solid state can be placed on the surface of the adherend 11 that has been heated to a temperature at which the curable resin composition liquefies, and the curable resin composition can thereby be liquified and applied. After the uncured curable resin composition in a solid state is placed on the surface of the adherend 11, the adherend 11 or the entirety may be heated to a temperature at which the curable resin composition is liquefied.

The adherend with an adhesive layer 10 according to the present embodiment can be manufactured in the above-described manner.

### (Second embodiment)

A roll-shaped adherend with an adhesive layer according to a second embodiment of the present disclosure will be described. The roll-shaped adherend with an adhesive layer according to the present embodiment is formed into a roll shape by the above-described adherend with an adhesive layer 10 according to the first embodiment by being wound in a longitudinal direction. Specifically, the roll-shaped adherend with an adhesive layer can be formed into a roll shape by one end portion in the longitudinal direction of the adherend with an adhesive layer having a longitudinal direction (such in a shape of a strip) being attached to a shaft, such as a resin tube, and wound around the shaft.

The roll-shaped adherend with an adhesive layer according to the present embodiment is formed into a roll shape by the adherend with an adhesive layer being wound in the longitudinal direction. Therefore, the roll-shaped adherend with an adhesive layer according to the present embodiment can be supplied to a highly productive roll-to-roll line, enabling structures to be manufactured at low cost. In addition, the roll-shaped adherend with an adhesive layer according to the present embodiment can be formed into adherends with adhesive layers of various dimensions by a cutting position in the longitudinal direction being selected as appropriate. As a result, the adherends with adhesive layers can be applied to structures of various dimensions, and a degree of freedom in production is high.

The roll-shaped adherend with an adhesive layer according to the present embodiment is formed into a roll shape by being wound. Therefore, if the adherend with an adhesive layer is wound as is, the "adhesive layer" comes into contact with a "back surface of the adherend" that is positioned one layer inward. Therefore, when the adherend with an adhesive layer is pulled out from the roll-shaped adherend with an adhesive layer and used, an interlayer member having a sheet-like shape or the like for the purpose of at least either of peeling and protection can be sandwiched between the layers of the wound adherend with an adhesive layer to allow the adherend with an adhesive layer to be pulled out more smoothly.

However, the roll-shaped adherend with an adhesive layer according to the present embodiment uses the adherend with an adhesive layer 10 according to the first embodiment in which stickiness of the adhesive layer is suppressed as described above according to the first embodiment. Therefore, the roll-shaped adherend with an adhesive layer according to the present embodiment can also be configured such that no interlayer member such as that described above is sandwiched between the layers of the wound adherend with an adhesive layer. Even in cases in which such a configuration is used, the adherend with an adhesive layer can be pulled out smoothly because the stickiness of the adhesive layer is minimal. Furthermore, in this case, because no interlayer member that becomes waste is produced during manufacturing of the structure, a roll-shaped adherend with an adhesive layer that is advantageous in terms of reducing cost, achieving zero emissions, and the like can be obtained.

Other configurations and working effects are similar to those of the adherend with an adhesive layer 10 according to the first embodiment.

### (Third embodiment)

A structure according to a third embodiment of the present disclosure will be described. The structure according to the present embodiment is configured using the adherend with an adhesive layer according to the first embodiment. The above-described adherend with an adhesive layer can include an adherend with an adhesive layer that is pulled out and cut from the roll-shaped adherend with an adhesive layer according to the second embodiment. Specifically, the structure has an adherend with an adhesive layer and a counterpart adherend that is a counterpart of the adherend provided in the adherend with the adhesive layer, and is configured such that the adherend provided in the adherend with an adhesive layer is bonded to a surface of the counterpart adherend by the adhesive layer provided in the adherend with an adhesive layer.

The counterpart adherend can be composed of a metal material or a resin material. The material composing the counterpart adherend may be the same material as that of the adherend provided in the adherend with an adhesive layer, or may be a different material.

As examples of the metal material and resin material composing the counterpart adherend, the above-described metal materials and resin materials composing the adherend provided in the above-described adherend with an adhesive layer can be given.

Examples of of the structure include heat exchangers such as radiators, evaporators, and capacitors, sensors, resin housings for electronic control products and the like, and various assembly members. For example, when the structure is a heat exchanger, a plate with an adhesive layer serving as the adherend with an adhesive layer can be used to join the plate and a fin provided on a heat exchanger main body of the heat exchanger. The bonded adhesive layer is in a cured state.

The structure according to the present embodiment is configured using the adherend with an adhesive layer 10 according to the first embodiment in which stickiness of the adhesive layer can be suppressed. Therefore, the structure according to the present embodiment has excellent workability during handling of the adherend with an adhesive layer during production. In addition, during production of the structure according to the present embodiment, the adherend with an adhesive layer can be bonded to the counterpart adherend by heating. Therefore, a step of applying a separate adhesive when bonding the adherends can be omitted. Consequently, the structure according to the present embodiment is excellent in terms of productivity.

Other configurations and working effects are similar to those of the adherend with an adhesive layer 10 according to the first embodiment.

### (Examples)

### <Preparation of materials>

The following materials were prepared as materials used to fabricate adherends with adhesive layers in examples and comparative examples.

### -Adherends-

- Aluminum (Al) adherend
- Polybutylene terephthalate (PBT) adherend
- Polyphenylene sulfide (PPS) adherend

### -(A) Epoxy resins-

- Epoxy resin a1 ("YX4000K" manufactured by Mitsubishi Chemical Corporation, biphenyl type, unsubstituted biphenyl epoxy ratio: <1%, melting point: 105°C, crystalline)
- Epoxy resin a2 ("YL6121HA" manufactured by Mitsubishi Chemical Corporation, biphenyl type, unsubstituted biphenyl epoxy ratio: 50%, melting point: 96°C, crystalline)
- Epoxy resin a3 ("YDC-1312" manufactured by Nippon Steel Chemical & Material Co., Ltd., hydroquinone type, melting point: 142°C, crystalline)
- Epoxy resin a4 ("NC3100" manufactured by Nippon Kayaku Co., Ltd., biphenyl aralkyl type, softening point: 97°C)

Here, epoxy resin a4 is non-crystalline and is therefore not an example of a component (A) in the present disclosure. However, epoxy resin a4 is described in the column for component (A) for convenience of description.

### -(B) Curing agents-

- Curing agent b1 (amine-based curing agent) ("DICY7" manufactured by Mitsubishi Chemical Corporation, solid at 25°C, melting point: 208°C)
- Curing agent b2 (amine-based curing agent) ("WA" manufactured by Mitsubishi Chemical Corporation, liquid at 25°C)

Here, curing agent b2 is a liquid at 25° C and is therefore not an example of a component (B) in the present disclosure. However, curing agent b2 is described in the column for component (B) for convenience of description.

### -(C) Amorphous thermoplastic resin-

- Polyethersulfone (PES) ("5003PS" manufactured by Sumitomo Chemical Co., Ltd., average particle size: 100 µm or less)

### -(D) Other-

- Curing accelerator (modified imidazole) ("2MAOK-PW" manufactured by Shikoku Kasei Co., Ltd., melting point: 260°C)

### <Fabrication of adherend with adhesive layer>

### -Example 1-

The epoxy resin a1, the curing agent b1, polyethersulfone, and the curing accelerator were kneaded with a roll mill at 50°C to 120°C to obtain a composition (parts by mass) shown in Table 1. The composition was then returned to room temperature to obtain a curable resin composition in a solid state. Here, in the preparation of the curable resin composition, polyethersulfone was dispersed in the form of particles. Next, the obtained solid-state curable resin composition was heated to 130°C and liquified. The liquified curable resin composition was then applied using a bar coater C to have a film thickness of 100 µm to one surface of an aluminum adherend that had been heated to 130°, and returned to room temperature. As a result, an adherend with an adhesive layer of Example 1 was obtained.

### -Example 2-

An adherend with an adhesive layer of example 2 was obtained in a manner similar to the fabrication of Example 1, other than the composition being changed to that shown in Table 1.

### -Example 3-

The epoxy resin a1 and polyethersulfone were compatibilized by heating and stirring at 130°C to obtain a composition (parts by mass) shown in Table 1, and then returned to room temperature (25°C). The composition was subsequently pulverized with a hammer to a size of about several millimeters. Next, the obtained pulverized epoxy resin a1, the curing agent b1, and the curing accelerator were kneaded with a roll mill at 50°C to 120°C to obtain a composition (parts by mass) shown in Table 1. The kneaded composition was then returned to room temperature to obtain a curable resin composition in a solid state. Next, the obtained solid-state curable resin composition was heated to 130°C and liquified. The liquified curable resin composition was then applied using a bar coater to have a film thickness of 100 µm to one surface of an aluminum adherend that had been heated to 130°C, and returned to room temperature. As a result, an adherend with an adhesive layer of Example 3 was obtained.

### -Example 4-

An adherend with an adhesive layer of example 4 was obtained in a manner similar to the fabrication of Example 1, other than the composition being changed to that shown in Table 1.

### -Example 5-

An adherend with an adhesive layer of example 5 was obtained in a manner similar to the fabrication of Example 4, other than a polybutylene terephthalate adherend being used.

### -Example 6-

An adherend with an adhesive layer of example 6 was obtained in a manner similar to the fabrication of Example 4, other than a polyphenylene sulfide adherend being used.

### -Example 7 to Example 15-

Adherends with adhesive layers of example 7 to example 15 were obtained in a manner similar to the fabrication of example 1, other than the compositions being changed to those shown in Table 2 and Table 3. However, in the fabrication of the adherends with adhesive layers in example 9, example 14, and example 15, the heating temperature was changed to 150°C.

### -Comparative Example 1 to Comparative Example 3-

Adherends with adhesive layers of comparative example 1 to comparative example 3 were obtained in a manner similar to the fabrication of example 1, other than the compositions being changed to those shown in Table 4.

### <Evaluation>

### -Storage stability-

The solid-state curable resin compositions prepared as described above were liquified by heating to 130°C, and initial viscosity was measured. Next, the curable resin compositions were each stored in air at 40°C for three months. Next, the curable resin compositions after storage were liquified by heating to 130°C, and the viscosity after storage was measured. In cases in which the viscosity after storage was less than 2.5 times the initial viscosity, the storage stability of the uncured curable resin composition was deemed favorable and rated "A". In cases in which the viscosity after storage was 2.5 times the initial viscosity or greater, the storage stability of the uncured curable resin composition was deemed poor and rated "C". Here, the viscosity was measured using a rheometer except for example 8 and example 9. A thermal flow evaluation device (flow tester) was used for example 8 and example 9.

### -Solidification-

The solid-state curable resin compositions prepared as described above were liquified by heating to 130°C to 150°C. The liquified curable resin compositions were then each applied using a bar coater to have a film thickness of 100 µm to one surface of an aluminum adherend that had been heated to 130°C to 150°C, and returned to room temperature. After returning to room temperature, each adhesive layer was touched with a spatula every ten minutes to check for stickiness. In cases in which adhered matter and resistance were not present when the adhesive layer was touched within one hour after the return to room temperature, solidification was deemed fast and rated "A". In cases in which adhered matter and resistance were not present when the adhesive layer was touched after one hour after the return to room temperature, solidification was deemed slow and rated "B". Here, resistance was determined to not be present when the adhesive layer was touched in cases in which no adhesive residue was left on the spatula. Resistance was determined to be present in cases in which when the adhesive layer was touched adhesive residue remained on the spatula.

### -Residual tackiness-

An adherend of the same type and shape as the adherend used in the adherend with an adhesive layer was placed on the surface of the adhesive layer of the adherend with an adhesive layer (adherend: length 80 mm x width 20 mm x thickness 3 mm). The adherend with an adhesive layer and the adherend were placed in close contact by fastening outer peripheral edges thereof with two clips. The clips that were used were "J34D 25 mm width" clips manufactured by Kokuyo Co., Ltd. This laminated body was left to stand at 60°C to 80°C for one hour. The clips were subsequently removed. Only one of the adherends was held and the other adherend was allowed to drop under its own weight. In cases in which no visible adhesive residue was present on the adherend on the overlapping side after being left at 80°C for one hour, the adhesive layer was deemed to have no tackiness, stickiness was deemed to be favorably suppressed, and residual tackiness was rated "A". In cases in which adhesive residue was found at 80°C but no visible adhesive residue was present on the adherend on the overlapping side after being left at 60°C for one hour, the tackiness of the adhesive layer was deemed to be slight and within an allowable range, stickiness was deemed to be suppressed, and residual tackiness was rated "B". In cases in which adhesive residue was present, the adhesive layer before curing had tackiness, stickiness was not suppressed, and residual tackiness was rated "C".

### -Adhesive strength-

In measuring the adhesive strength of the adherend with the adhesive layer using an aluminum adherend, an adhesive test piece was obtained in a following manner.

Specifically, the curable resin composition in a solid state was applied to a thickness of about 0.5 mm to 1 mm to one surface of the aluminum adherend (width 20 mm × length 70 mm × thickness 3 mm) that had been heated to 130°C. Next, after confirming that the curable resin composition had been liquified, the counterpart aluminum adherend (width 20 mm x length 70 mm x thickness 3 mm) that had been heated to 130°C was overlapped (overlapping length: 6 mm). The two aluminum adherends were clamped with a clip. Excess curable resin composition was then removed with a spatula, and the adhesive layer was thermally cured under following curing conditions: a curing temperature of 170°C and a curing time of 2 hours. The adhesion test piece was obtained in this manner.

In addition, when measuring the adhesive strength of the adherends with adhesive layers using the polybutylene terephthalate adherend and the polyphenylene sulfide adherend, adhesive test pieces were obtained in a following manner. Specifically, test pieces having a Type A1 shape according to JIS K7139 were cut in the center and used as the polybutylene terephthalate adherend and the polyphenylene sulfide adherend. Wide surfaces on both ends of the original shape were bonded together with an adhesive layer cured under the same curing conditions as described above. The adhesive test pieces were obtained in this manner.

The adhesive strength of each of the adhesive test pieces was determined at room temperature at a tensile speed of 5 mm/min. The adhesive strength is a tensile shear adhesive strength.

Details of the curable resin composition in each adherend with an adhesive layer, evaluation results, and the like are compiled and shown in Table 1 to Table 4. In each table, "dispersed" indicates that polyethersulfone remains as particles (dispersed) at a stage before application to the adherend and "compatible" indicates that polyethersulfone is compatibilized with the epoxy resin before application.

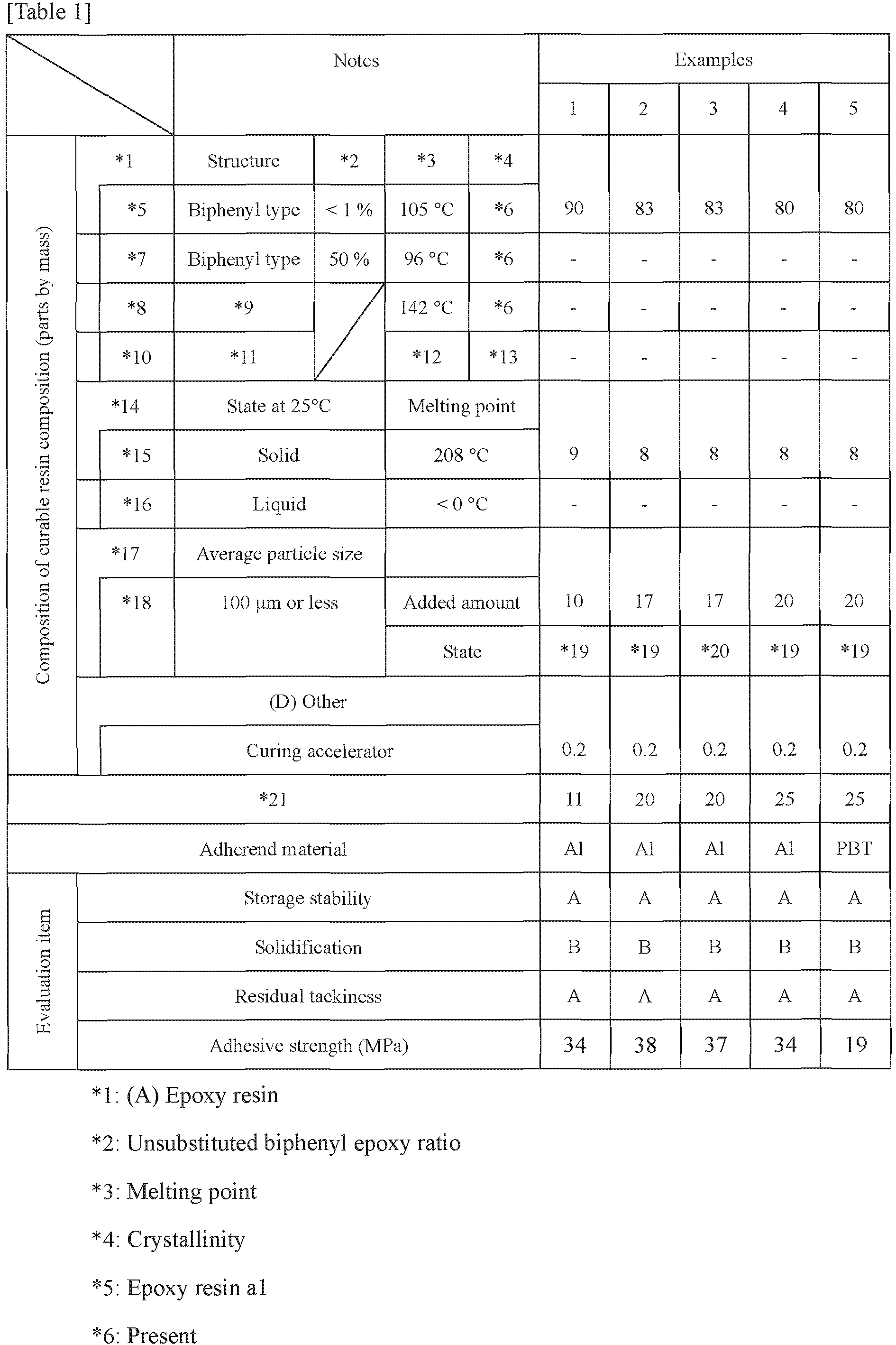

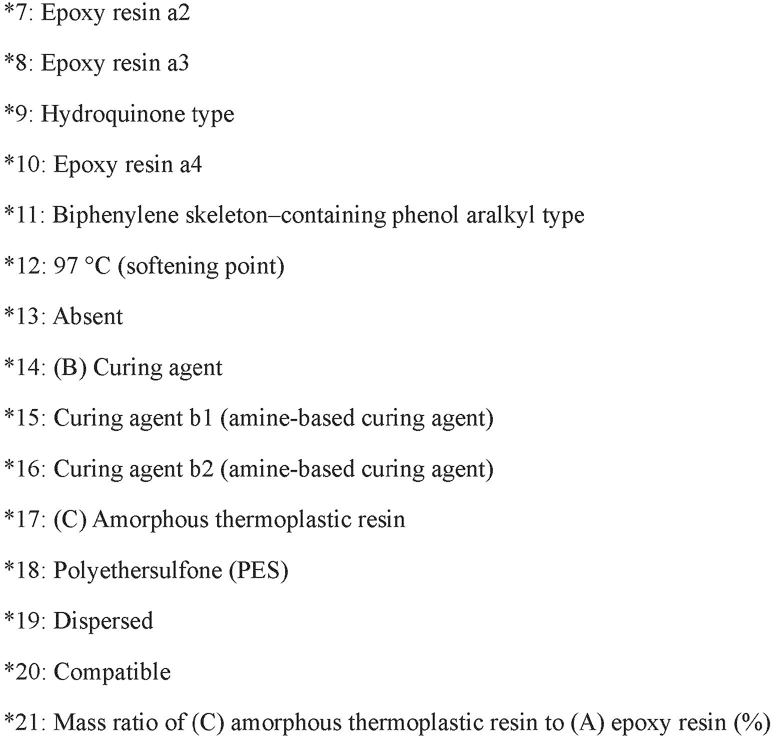

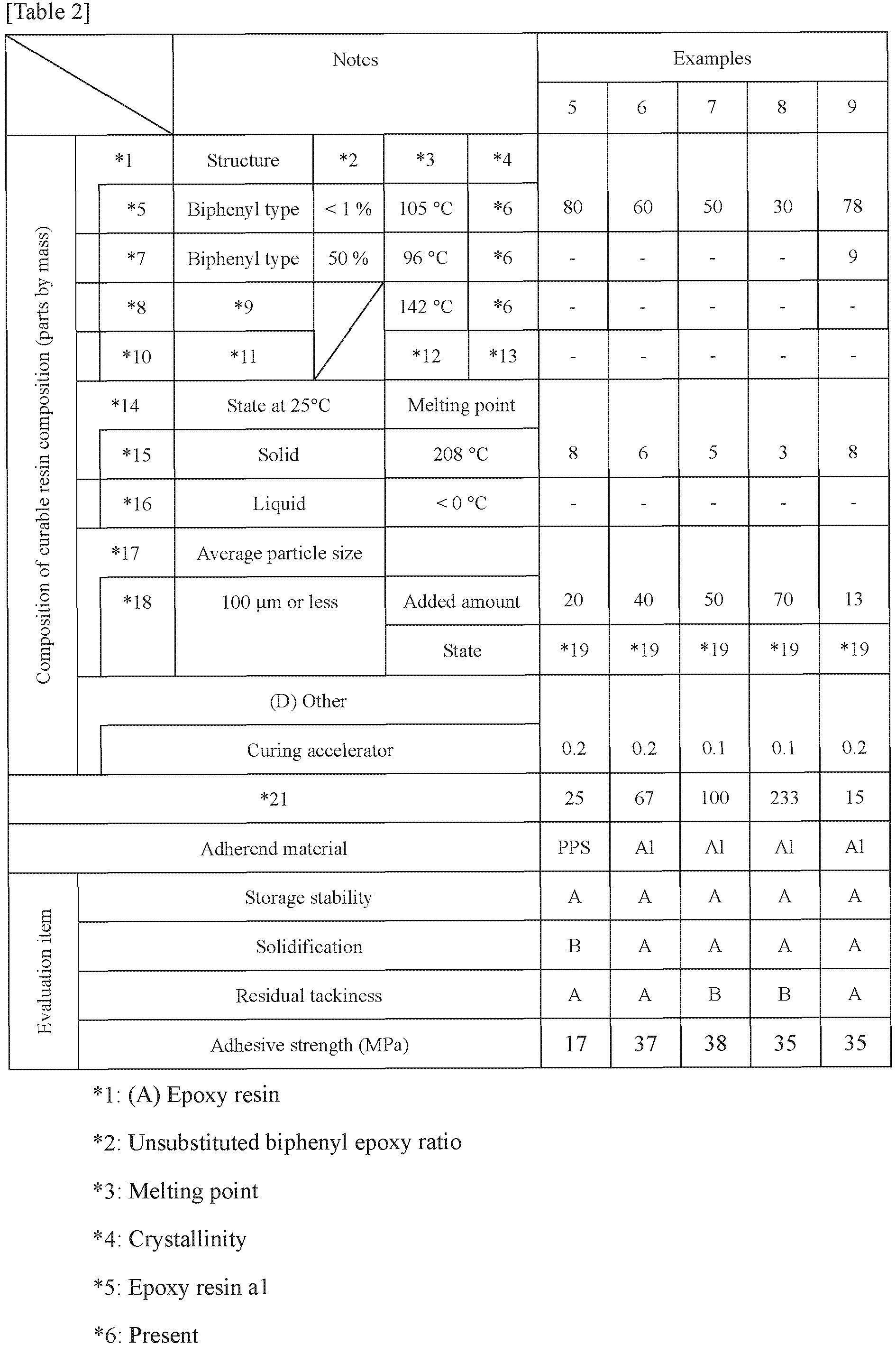

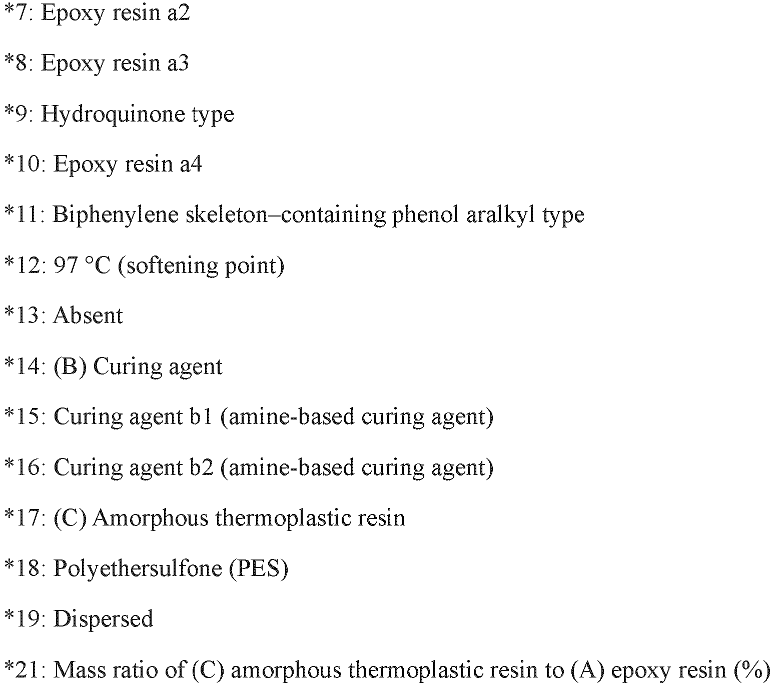

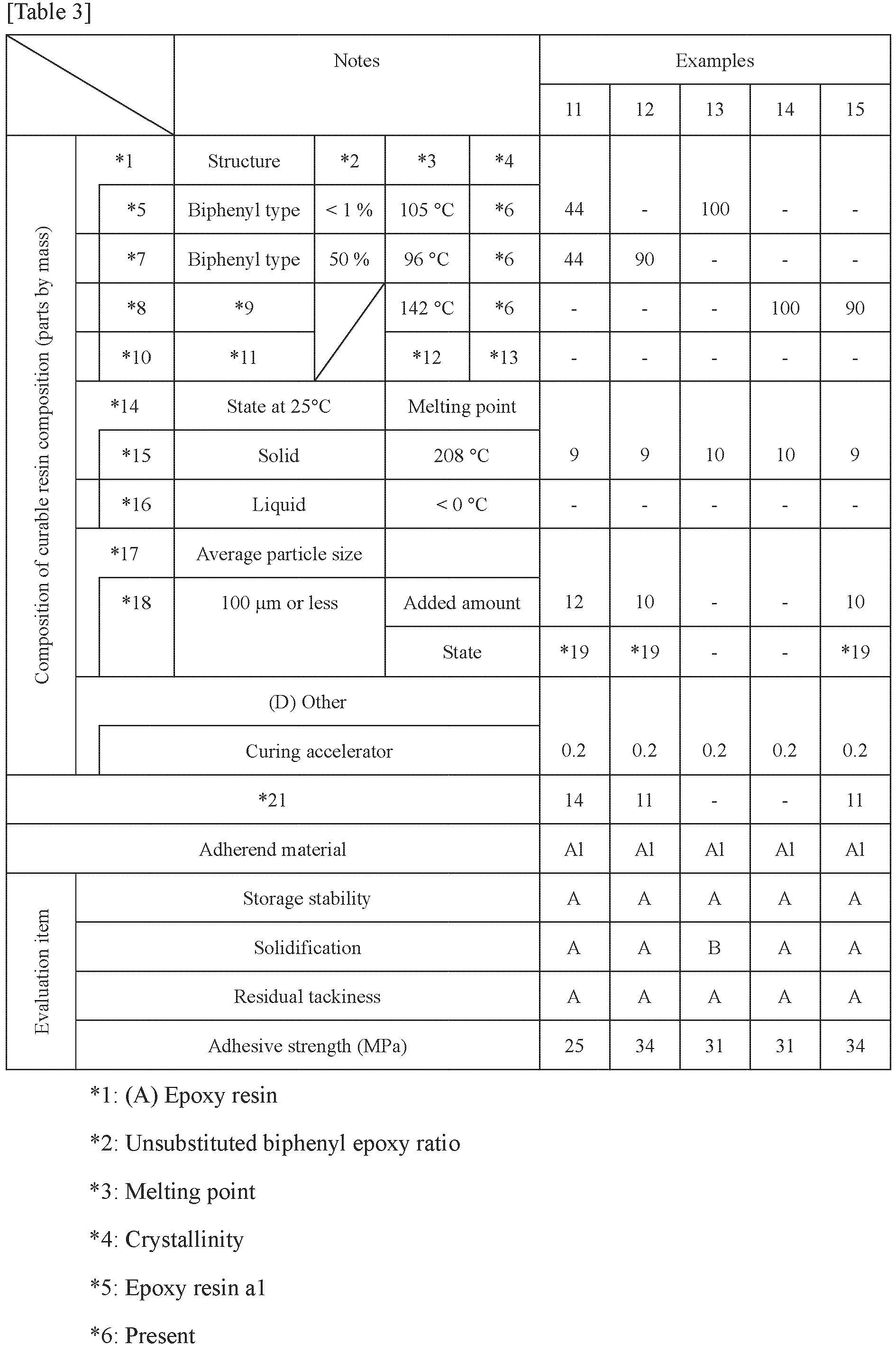

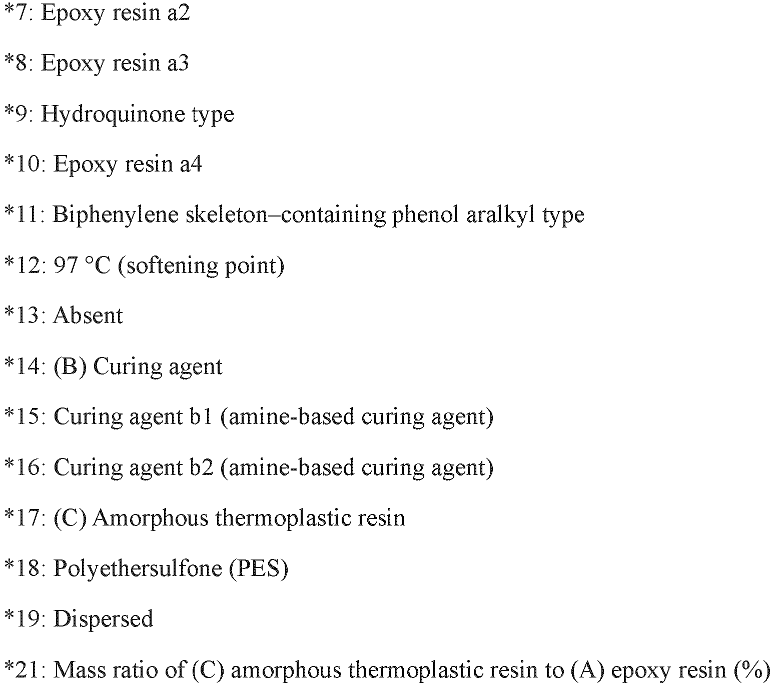

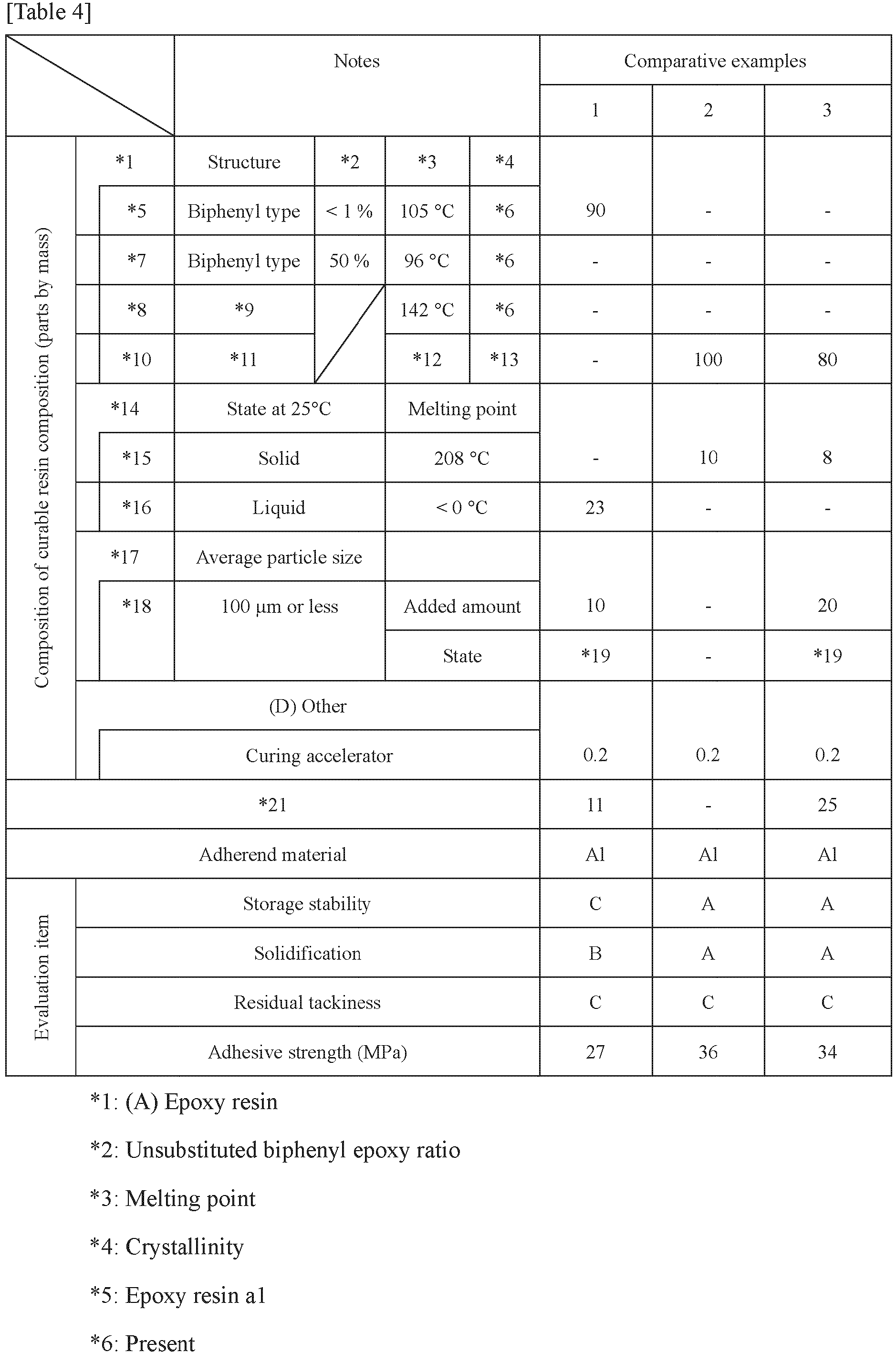

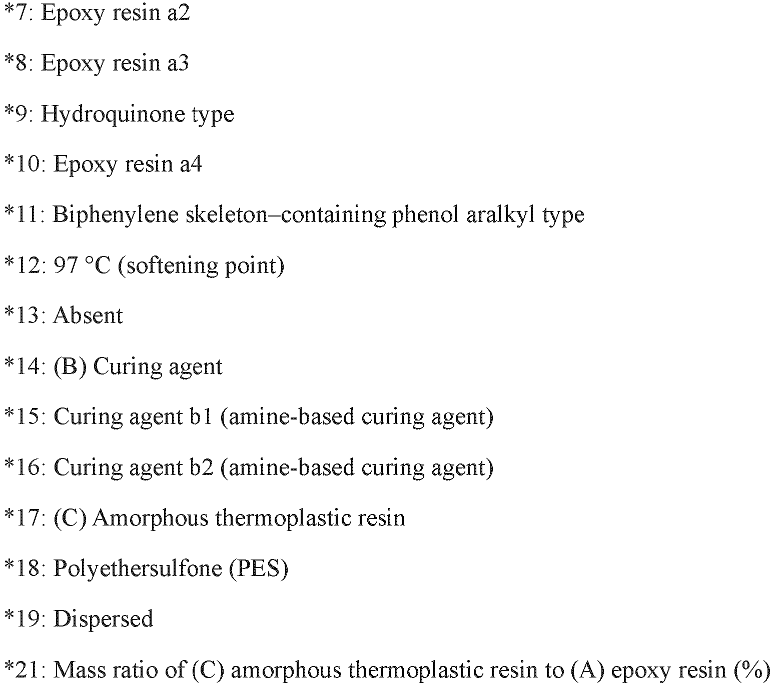

The following becomes clear based on the tables. In comparative example 1, the curable resin composition does not contain a curing agent that is a solid at 25°C as the curing agent that is component (B), but instead contains a curing agent that is a liquid at 25°C. Therefore, in comparative example 1, the storage stability of the curable resin composition before curing was poor, and the adhesive layer had tackiness. Bonding due to stickiness could not be suppressed.

In comparative example 2, the curable resin composition does not contain a crystalline epoxy resin having a melting point of 90°C or higher as the crystalline epoxy resin that is component (A), but instead contains a non-crystalline epoxy resin having a softening point of 97°C. Therefore, in comparative example 2, the adhesive layer had tackiness, and bonding due to stickiness could not be suppressed.

In comparative example 3, the curable resin composition does not contain a crystalline epoxy resin having a melting point of 90°C or higher as the crystalline epoxy resin that is component (A), but instead contains a non-crystalline epoxy resin having a softening point of 97°C. Therefore, in comparative example 3, the adhesive layer had tackiness, and bonding due to stickiness could not be suppressed.

In contrast, example 1 to example 15 meet the requirements prescribed in the present disclosure. Therefore, in example 1 to example 15, the uncured curable resin composition had good storage stability, and the stickiness of the adhesive layer could be suppressed. Furthermore, by example 1 to example 15 satisfying the requirements prescribed in the present disclosure, the adhesive layer before curing as in a solid state at room temperature and the surface of the adhesive layer had no stickiness. Therefore, workability during handling was excellent. The surface of the adhesive layer remained non-sticky even when heated to 80°C. The adhesive layer was melted, cross-linked, and cured at temperatures between 120°C and 150°C, and adhesive strength between the adhesive layer and the counterpart adherend could be ensured.

In addition, a comparison between example 1 and example 13 confirmed that a higher adhesive strength could be ensured by including the amorphous thermoplastic resin that is component (C) in the curable resin composition.

The present disclosure is not limited to the above-described embodiments and examples. Various modifications are possible without departing from the spirit of the present disclosure. In addition, configurations described according to the embodiments and examples above can be arbitrarily combined.

Characteristics of the present disclosure are as follows.

### [First aspect]

An adherend with an adhesive layer including: an adherend that is composed of a metal material or a resin material; and an adhesive layer that is laminated on a surface of the adherend and formed from an uncured curable resin composition that is in a solid state at room temperature, in which the curable resin composition includes (A) an epoxy resin having a melting point of 90°C or higher, and (B) a curing agent that is a solid at 25°C.

### [Second aspect]

The adherend with an adhesive layer according to the first aspect, in which: the curable resin composition further contains (C) an amorphous thermoplastic resin.

### [Third aspect]

The adherend with an adhesive layer according to the second aspect, in which: the amorphous thermoplastic resin is polyethersulfone.

### [Fourth aspect]

The adherend with an adhesive layer according to any one of the second to fourth aspects, in which: a mass ratio of the amorphous thermoplastic resin to the crystalline epoxy resin is 5% or greater and 100% or less.

### [Fifth aspect]

The adherend with an adhesive layer according to any one of the second to fourth aspects, in which: the amorphous thermoplastic resin is present as particles.

### [Sixth aspect]

The adherend with an adhesive layer according to the fifth aspect, in which: an average particle size of the particles is 0.1 µm or greater and 200 µm or less.

### [Seventh aspect]

The adherend with an adhesive layer according to any one of the first to sixth aspects, in which: the curing agent is an amine-based curing agent having a melting point of 170°C or higher.

### [Eighth aspect]

The adherend with an adhesive layer according to any one of the first to seventh aspects, in which: in the crystalline epoxy resin, a mass ratio of the epoxy resin having a biphenyl skeleton without a substituent group in the crystalline epoxy resin is 2% or greater and 60% or less.

### [Ninth aspect]

A roll-shaped adherend with an adhesive layer that is formed into a roll shape by an adherend with an adhesive layer according to any one of the first to eighth aspects being wound in a longitudinal direction.

### [Tenth aspect]

The roll-shaped adherend with an adhesive layer according to the ninth aspect, in which: no interlayer member for a purpose of at least either of peeling and protection is sandwiched between layers of the wound adherend with an adhesive layer.

### [Eleventh aspect]

A structure configured using an adherend with an adhesive layer according to any one of the first to eighth aspects.

## Claims

1. An adherend with an adhesive layer comprising:
an adherend that is composed of a metal material or a resin material; and
an adhesive layer that is laminated on a surface of the adherend and formed from an uncured curable resin composition that is in a solid state at room temperature, wherein
the curable resin composition includes
(A) an epoxy resin having a melting point of 90°C or higher, and
(B) a curing agent that is a solid at 25°C.

2. The adherend with an adhesive layer according to claim 1, wherein:
the curable resin composition further includes (C) an amorphous thermoplastic resin.

3. The adherend with an adhesive layer according to claim 1, wherein:
the curing agent is an amine-based curing agent having a melting point of 170°C or higher.

4. The adherend with an adhesive layer according to claim 2, wherein:
the amorphous thermoplastic resin is polyethersulfone.

5. The adherend with an adhesive layer according to claim 2, wherein:
a mass ratio of the amorphous thermoplastic resin to the crystalline epoxy resin is 5% or greater and 100% or less.

6. The adherend with an adhesive layer according to claim 1, wherein:
in the crystalline epoxy resin, a mass ratio of the epoxy resin having a biphenyl skeleton without a substituent group in the crystalline epoxy resin is 2% or greater and 60% or less.

7. The adherend with an adhesive layer according to claim 2, wherein:
the amorphous thermoplastic resin is present as particles.

8. The adherend with an adhesive layer according to claim 7, wherein:
an average particle size of the particles is 0.1 µm or greater and 200 µm or less.

9. A roll-shaped adherend with an adhesive layer that is formed into a roll shape by the adherend with an adhesive layer according to any one of claims 1 to 8 being wound in a longitudinal direction.

10. The roll-shaped adherend with an adhesive layer according to claim 9, wherein:
no interlayer member for a purpose of at least either of peeling and protection is sandwiched between layers of the wound adherend with an adhesive layer.

11. A structure configured using the adherend with an adhesive layer according to any one of claims 1 to 8.
